# EUROPEAN PATENT APPLICATION

(11) **EP 4 738 104 A1**
(43) Date of publication of application: **06.05.2026**
(21) Application number: 25211203.2
(22) Date of filing: 24.10.2025
(51) Int. Cl.: G06F 8/65

(54) **REGRESSION DETECTION USING INDICATORS FROM DEPENDENT SERVICES**

(30) Priority: 31.10.2024 US 202418933983
(71) Applicant: Microsoft Technology Licensing, LLC, Redmond, WA 98052 (US)
(72) Inventor: SUTHAR AKA GAJJAR, Meera Alpeshkumar, Redmond, Washington 98052 (US); NARASIMHAN, Arvind, Redmond, Washington 98052 (US); AGHAEI KHOUZANI, Hoda, Redmond, Washington 98052 (US); GANGAL, Ashish, Redmond, Washington 98052 (US); KUMAR, Rajive, Redmond, Washington 98052 (US); KWOK, Pui Yan, Redmond, Washington 98052 (US); XU, Zhangwei, Redmond, Washington 98052 (US); AGRAWAL, Laxmikant, Redmond, Washington 98052 (US)
(74) Representative: CMS Cameron McKenna Nabarro Olswang LLP

(57) **Abstract**

A system implements techniques for efficiently determining that an update deployed by a foundational service has caused a regression based on an aggregate health determination associated with tenant services and/or cloud resource provider services that depend upon the foundational service. The deployment of the update is initiated by an entity (e.g., an engineering team) tasked with operating and/or managing the foundational service. Accordingly, the system described herein can generate and provide a communication, to the foundational service (e.g., entity), indicating that a regression has likely been caused by the update and/or instructing the foundational service to halt the deployment of the update.

## Description

### BACKGROUND

A cloud platform such as MICROSOFT AZURE, AMAZON WEB SERVICES, GOOGLE CLOUD, etc. is configured to provide network-based infrastructure and other resources for use by various tenants. A tenant may be a customer, a business, an organization, a client, an individual user, and so forth. An operator of a cloud platform configures and offers foundational services to support and/or enable the execution of tenant services (e.g., an application) and/or cloud resource provider services within a cloud computing environment.

An entity (e.g., an engineering team) that manages a foundational service frequently deploys updates to the foundational service. An update includes modified code and/or other mechanisms configured to maintain, correct, add, and/or remove functionality (e.g., a feature) associated with the foundational service. Unfortunately, these frequently deployed updates can introduce or cause regressions that can result in functionality loss and/or sub-optimal experiences for the tenant services and/or cloud resource provider services that are supported and/or enabled by the foundational service. It is with respect to these and other considerations that the disclosure made herein is presented.

### SUMMARY

The system described herein implements techniques for efficiently determining that an update deployed by a foundational service has caused a regression. The regression can impact the performance of tenant services and/or cloud resource provider services that depend upon the foundational service. The deployment of the update is initiated by an entity (e.g., an engineering team) tasked with operating and/or managing the foundational service. Accordingly, the system described herein can generate and provide a communication, to the foundational service (e.g., the entity), indicating that a regression has likely been caused by the update and/or instructing the foundational service to halt the deployment of the update before further functionality loss and/or sub-optimal experiences for the tenant services and/or cloud resource provider services are realized.

To do this, the system generates a dependency graph that defines dependencies between the foundational services and advanced services executing within a cloud computing environment. The advanced services include the tenant services and/or the cloud resource provider services. An operator of a cloud computing environment offers the foundational services to support and/or enable the execution of the tenant services and/or the cloud resource provider services. Accordingly, the foundational services may be referred to as the "building blocks" of the cloud computing environment.

A node within the dependency graph represents an advanced service or a foundational service that can be identified, or registered, within the cloud computing environment. Accordingly, each node in the dependency graph includes an identification parameter (e.g., a name) that distinguishes one service from other services. Generally, an advanced service is dependent upon multiple foundational services. Consequently, the dependency graph includes edges that connect nodes in order to reflect the dependencies. In one example, a dependency between an advanced service and a foundational service can be implicitly added to the dependency graph based on a call from the advanced service to the foundational service (e.g., an "auto-generated" dependency). In another example, a dependency between an advanced service and a foundational service can be explicitly added to the dependency graph by an owner of the advanced service or the entity tasked with operating and/or managing the foundational service (e.g., a "user-defined" dependency).

Each node in the dependency graph that represents an advanced service or a foundational service further includes one or more location parameters that identify geographic regions of the cloud computing environment in which the advanced service or the foundational service is executing. The geographic regions in which the advanced service or the foundational service executes are defined by an operator of the cloud computing environment. The geographic regions can be smaller (e.g., cities, counties, states/provinces) or larger (e.g., parts of countries, continents).

The foundational services can be categorized into different categories of foundational services, such as "compute" foundational services, "storage" foundational services, and "networking" foundational services. Within the different categories of foundational services there are different types of foundational services configured to satisfy the varying needs and/or preferences of the advanced services. Therefore, owners of the advanced services (e.g., tenants, resource provider teams) select amongst the different types of foundational services in a given category. For example, an owner of an advanced service may select a type of compute foundational service, a type of storage foundational service, and a type of networking foundational service to enable seamless execution of the advanced service.

To illustrate examples types of foundational services within the compute foundational service category, an advanced service can select and/or be configured to use a "virtual machine" foundational service that provisions whole virtual machines to an advanced service, giving the advanced service full control over their computing needs. In another example within the compute foundational service category, an advanced service can select and/or be configured to use a "batch" foundational service that creates and manages a pool of compute nodes to execute the advanced service in a manner that has less control compared to the virtual machine foundational service. In yet another example within the compute foundational service category, an advanced service can select and/or be configured to use a "functions" foundational service that provisions resources for event-driven workloads with short-lived processes, thereby enabling serverless solutions that allow the advanced service to write less code and maintain less infrastructure. In a further example within the compute foundational service category, an advanced service can select and/or be configured to use a "container" foundational service that executes jobs in isolated containers without orchestration. In a final example within the compute foundational service category, an advanced service can select and/or be configured to use an "orchestrated container" foundational service that executes jobs in orchestrated containers. Other types of compute foundational services are also contemplated in the context of this disclosure. Examples of storage and networking foundational services are provided below in the Detailed Description section.

As further described herein, a particular foundational service deploys an update in association with a rollout schedule. The rollout schedule defines an order for which the update is to be deployed to the geographic regions of the cloud computing environment. The rollout schedule further defines times at which the update is to be deployed to the geographic regions in the order. More specifically, the update is sequentially deployed, over time, to the infrastructure (e.g., a datacenter, an edge site, a server farm) that composes the geographic regions of the cloud computing environment. The rollout schedule allows the system to monitor the update and determine if a regression occurs earlier in the rollout process (e.g., the first geographic region or the earlier set of geographic regions in the order) before the regression affects a larger number of advanced services (e.g., a majority of the geographic regions in the order).

As a result of the techniques described herein related to early regression detection, the order of geographic regions may be based on the relevancy of the geographic regions, thereby limiting the negative impacts of a regression. In one example, the relevance of the geographic regions is determined based on an amount of traffic (e.g., a number of requests received from tenant services and/or cloud resource provider services) in the geographic regions. Accordingly, the system determines the order for the geographic regions based on an amount of traffic registered for each geographic region in a defined time period. That is, the first geographic region in the order has a lowest amount of traffic of all the geographic regions and the last geographic region in the order has the highest amount of traffic of all the geographic regions.

The system described herein determines that a particular foundational service is deploying an update via a rollout schedule that defines an order for the geographic regions in the cloud computing environment. For example, the particular foundational service can provide, and the system receives, a notification indicating that an update is being deployed based on the rollout schedule. The system uses the dependency graph to identify a set of advanced services that depend on the particular foundational service within a first geographic region in the order for the geographic regions (may be referred to as "regions" herein). For instance, the system accesses the dependency graph to locate a node with an identification parameter associated with the particular foundational service. The system uses the node associated with the particular foundational service as a starting point and follows edges of the dependency graph to identify connected nodes that represent advanced services that depend on the particular foundational service within the first geographic region. The identified nodes include a location parameter that matches a location parameter of the first geographic region.

Now that the system has identified the set of advanced services that depend on the particular foundational service within the first geographic region, the system can use health signals associated with the set of advanced services to determine if the update to the foundational service causes a regression in the first geographic region. Before the regression determination is further discussed below, it is noted that if no regression is determined in the first geographic region, then the regression detection techniques described herein can be applied to subsequent geographic regions in the order on a region-by-region basis (e.g., the second geographic region in the order, the third geographic region in the order, and so forth).

In one example, the health signals used to determine if the update causes the regression are a standard, or common, set of service level indicators that the cloud computing environment monitors. Thus, the service level indicators being monitored can be defined by an operator of the cloud computing environment. The service level indicators can include metrics such as latency (e.g., a measure of how long it takes to return a response to a request), error rate (e.g., a number of requests that encounter an error compared to a total number of requests processed), throughput (e.g., a measure of requests handled per second), and/or durability (e.g., a metric that tracks the resiliency and ability to maintain data integrity over time). Other service level indicators are contemplated in the context of this disclosure.

Accordingly, the system retrieves values for the service level indicators for each advanced service in the set of advanced services. Then, the system applies an anomaly detection algorithm to the retrieved values to categorize a health of each advanced service in the set of advanced services as being one of "healthy" or "unhealthy". The anomaly detection algorithm can be specific to the advanced service. In one example, the system executes the anomaly detection algorithm to determine whether the values for a specific service level indicator are above or below a threshold value established to indicate a healthy scenario or an unhealthy scenario. The anomaly detection algorithm can be a dynamic anomaly detection algorithm that implements time-based adjustments to a range of accepted or expected values for a service level indicator over time by learning the aforementioned higher threshold value to define the top of the range and/or the aforementioned lower threshold value to define the bottom of the range. Alternatively, the anomaly detection algorithm can use static thresholds to define the top and/or the bottom of the range.

Accordingly, the threshold values used in the anomaly detection algorithm are specific to the advanced service and are established for individual service level indicators. Moreover, the threshold values can be specific to a particular geographic region. In one example, the anomaly detection algorithm is configured to apply weighted parameters to the determinations for individual service level indicators in order to identify scenarios where the monitored service level indicators, as an aggregate, indicate that the advanced service is unhealthy. Stated alternatively, the anomaly detection algorithm is configured to determine when the retrieved values, considered as an aggregate across the service level indicators, indicate that the performance of the advanced service is being impacted in a negative manner.

In various examples, the threshold values used by the anomaly detection algorithm are determined via a machine learning model. The machine learning model generates the threshold values by analyzing a training dataset for the advanced service over a training time period. The training dataset includes monitored values for the service level indicators as well as health state labels indicating whether the performance of the advanced service is satisfactory or unsatisfactory at a given point in time or during a particular time period. The health state labels may be individually applied to a service level indicator or universally applied to all the service level indicators. The machine learning model can be any type of predictive model configured to predict when the advanced service is in an unhealthy state after the deployment of an update to a foundational service upon which the advanced service depends. The machine learning model can use any one of neural networks (e.g., convolutional neural networks, recurrent neural networks such as Long Short-Term Memory), Gated Adaptive Network for Deep Automated Learning of Features, Naive Bayes, k-nearest neighbor algorithm, majority classifier, support vector machines, random forests, boosted trees, Classification and Regression Trees (CART), and so on.

Now that the system has determined whether each advanced service in the set of advanced services is healthy or unhealthy, the system can determine whether the update is causing a regression for the particular foundational service that is deploying the update based on a number of unhealthy advanced services in the set of advanced services. That is, the system determines that the update is causing the regression if the number of unhealthy advanced services satisfies a threshold number of unhealthy advanced services (e.g., is greater than the threshold number). In contrast, the system determines that the update is not causing the regression if the number of unhealthy advanced services does not satisfy the threshold number of unhealthy advanced services (e.g., is less than the threshold number).

If the system determines that the update is causing the regression, the system generates and provides a communication, to the particular foundational service (e.g., the entity tasked with operating and managing the particular foundational service), indicating that a regression has likely been caused by the update and/or instructing the particular foundational service to halt the deployment of the update so that it is not deployed to subsequent geographic regions in the order for the geographic regions.

Consequently, the system uses the dependency graph to identify dependent services and access the dependent services' health signals after deployment of the update to ensure there is no regression. As further described below, a technical benefit of the techniques described herein allow for effective and efficient health modeling that can be applied and/or scaled to updates deployed by a variety of different foundational services. Moreover, via the automated process described herein, the amount of information that needs to be manually reviewed is limited.

This Summary is provided to introduce a selection of concepts in a simplified form that are further described blow in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF DRAWINGS

The Detailed Description is described with reference to the accompanying figures. In the description detailed herein, references are made to the accompanying drawings that form a part hereof, and that show, by way of illustration, specific embodiments or examples. The drawings herein are not drawn to scale. Like numerals represent like elements throughout the several figures.
FIG. 1 illustrates an example environment in which a system efficiently determines that an update deployed by a foundational service within a cloud computing environment has caused a regression.
FIG. 2A illustrates an example dependency graph with nodes representing both advanced services and foundational services, as well as edges that represent dependencies between services.
FIG. 2B illustrates a dependency graph database that is part of and/or supports the example dependency graph of FIG. 2A.
FIG. 2C illustrates the example dependency graph of FIG. 2A in which the set of advanced services that depend on a particular foundational service deploying an update is identified.
FIG. 3 illustrates how machine learning can be used to establish the threshold values used by an anomaly detection algorithm applied to determine if an advanced service is healthy or unhealthy.
FIG. 4 illustrates how a threshold number of unhealthy advanced services is determined.
FIG. 5 is a flowchart depicting an example process for determining that an update deployed by a foundational service within a cloud computing environment has caused a regression.
FIG. 6 is an example computing system in accordance with the present disclosure.

### DETAILED DESCRIPTION

The system described herein implements techniques for efficiently determining that an update deployed by a foundational service has caused a regression. The regression can impact the performance of tenant services and/or cloud resource provider services that depend upon the foundational service. The deployment of the update is initiated by an entity (e.g., an engineering team) tasked with operating and/or managing the foundational service. Accordingly, the system described herein can generate and provide a communication, to the foundational service (e.g., entity), indicating that a regression has likely been caused by the update and/or instructing the foundational service to halt the deployment of the update.

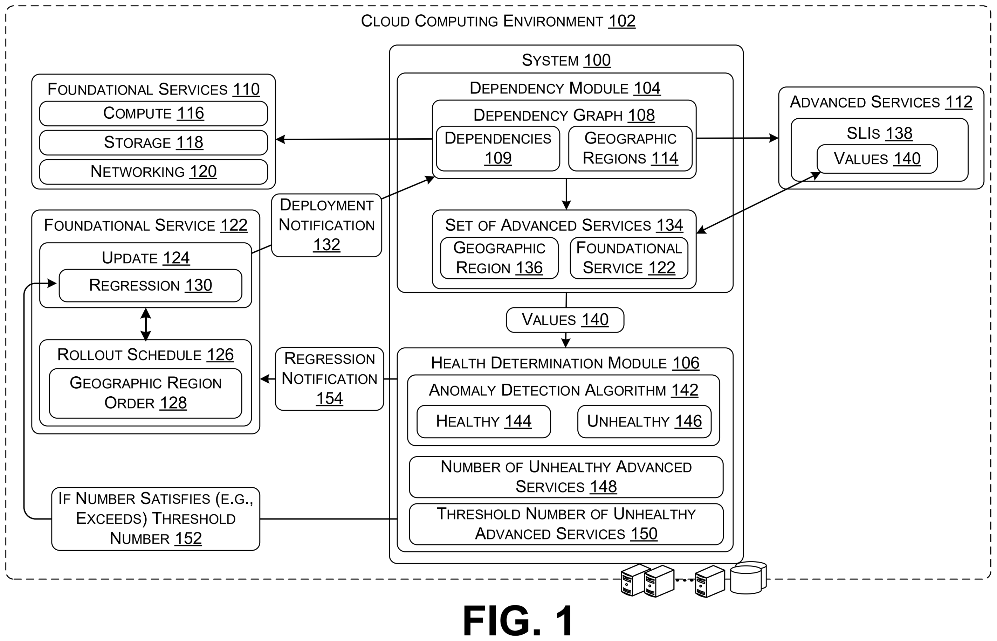

FIG. 1 illustrates an example environment in which a system 100 efficiently determines that an update deployed by a foundational service within a cloud computing environment 102 has caused a regression. The cloud computing environment 102 includes devices that are part of one or more cloud platforms, one or more edge networks, and/or one or more on-premises networks. The system 100 includes a dependency module 104 and a health determination module 106. The number of modules illustrated in FIG. 1 is just an example, and the number can vary. That is, functionality described herein in association with the illustrated modules can be performed by a fewer number of modules or a larger number of modules on one device (e.g., server) in the system 100 or spread across multiple devices in the system 100.

The dependency module 104 generates a dependency graph 108 that defines dependencies 109 between foundational services 110 and advanced services 112 executing within the cloud computing environment 102. The advanced services 112 can include tenant services and/or the cloud resource provider services. As described above, an operator of the cloud computing environment 102 offers the foundational services 110 to support and/or enable the execution of the tenant services and/or the cloud resource provider services. Accordingly, the foundational services 110 may be referred to as the "building blocks" of the cloud computing environment 102.

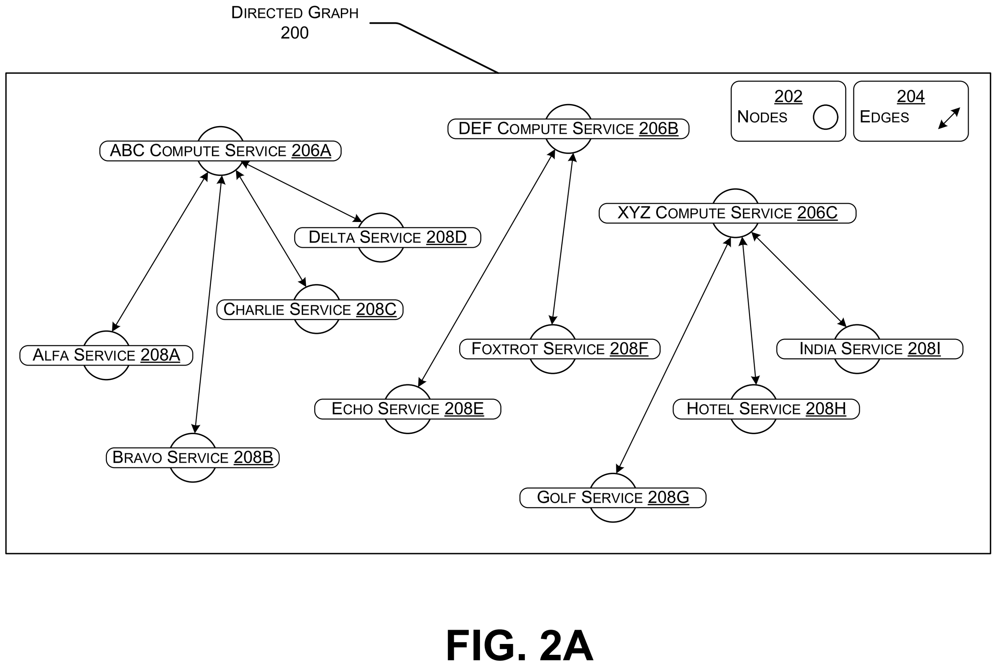

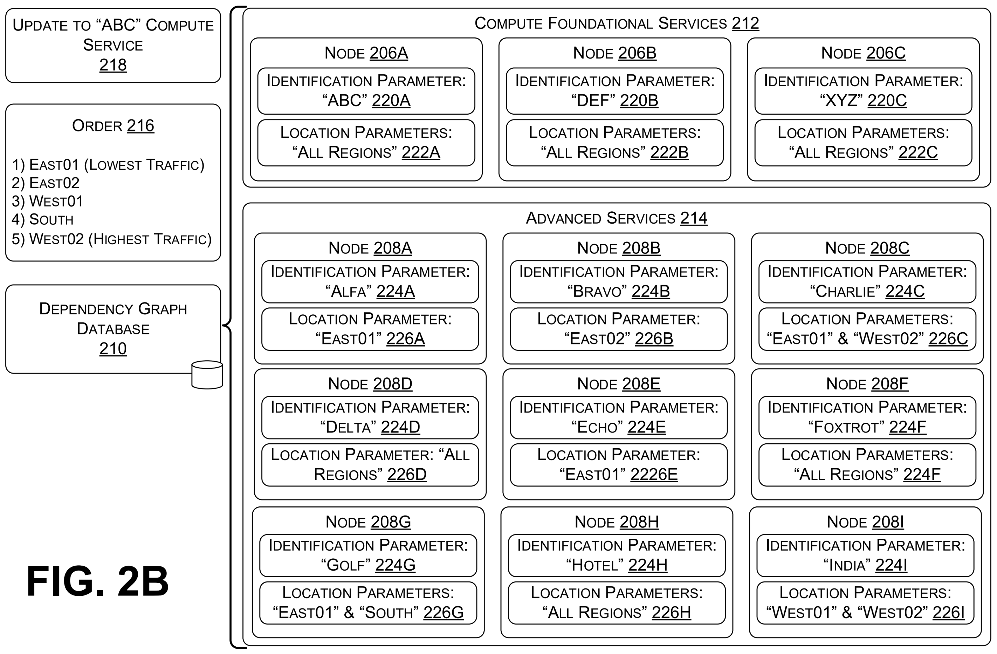

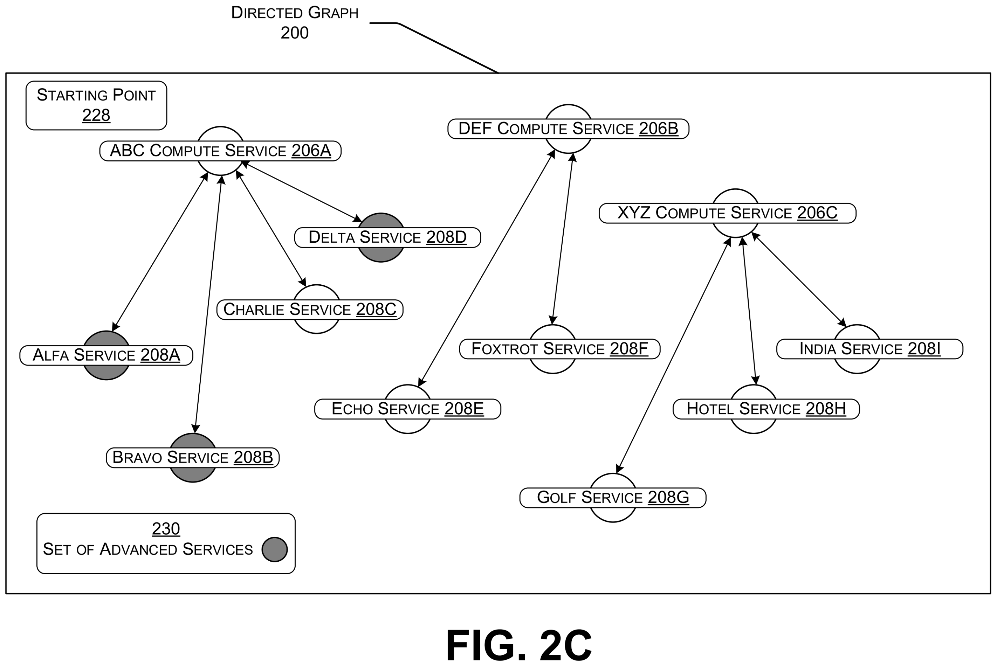

As described herein with respect to FIG. 2, a node within the dependency graph 108 represents an advanced service 112 or a foundational service 110 that can be identified, or registered, within the cloud computing environment 102. Accordingly, each node in the dependency graph 108 includes an identification parameter (e.g., a name) that distinguishes one service from other services. Generally, an advanced service 112 is dependent upon multiple foundational services 110. Consequently, the dependency graph 108 includes edges that connect nodes in order to reflect the dependencies 109. In one example, a dependency 109 between an advanced service 112 and a foundational service 110 can be implicitly added to the dependency graph 108 based on a call from the advanced service 112 to the foundational service 110 (e.g., an "auto-generated" dependency). In another example, a dependency 109 between an advanced 112 service and a foundational service 110 can be explicitly added to the dependency graph 108 by an owner of the advanced service 112 or the entity tasked with operating and/or managing the foundational service 110 (e.g., a "user-defined" dependency).

Each node in the dependency graph 108 that represents an advanced service 112 or a foundational service 110 further includes one or more location parameters that identify geographic regions 114 of the cloud computing environment 102 in which the advanced service 112 or the foundational service 110 is executing. The geographic regions 114 in which the advanced service 112 or the foundational service 110 executes are defined by an operator of the cloud computing environment 102. The geographic regions 114 can be smaller (e.g., cities, counties, states/provinces) or larger (e.g., parts of countries, continents).

The foundational services 110 can be categorized into different categories of foundation services, such as "compute" foundational services 116, "storage" foundational services 118, and "networking" foundational services 120. Other categories for the foundational services 110 are also contemplated in the context of this disclosure (e.g., "security" foundational services, "identity" foundational services).

Within the different categories of foundational services, there are different types of foundational services configured to satisfy the varying needs and/or preferences of the advanced services 112. Therefore, owners of the advanced services 112 (e.g., tenants, resource provider teams) can select amongst the different types of foundational services within the individual categories of foundation services. For example, an operator of an advanced service 112 may select a type of compute foundational service 116, a type of storage foundational service 118, and a type of networking foundational service 120 to enable seamless execution of the advanced service 112.

To illustrate examples types of foundational services within the compute foundational service 116 category, an advanced service 112 can select and/or be configured to use a "virtual machine" foundational service that provisions whole virtual machines to the advanced service 112, giving the advanced service 112 full control over their computing needs. In another example within the compute foundational service 116 category, an advanced service 112 can select and/or be configured to use a "batch" foundational service that creates and manages a pool of compute nodes to execute the advanced service 112 in a manner that has less control compared to the virtual machine foundational service. In yet another example within the compute foundational service 116 category, an advanced service 112 can select and/or be configured to use a "functions" foundational service that provisions resources for event-driven workloads with short-lived processes, thereby enabling serverless solutions that allow the advanced service 112 to write less code and maintain less infrastructure. In a further example within the compute foundational service 116 category, an advanced service 112 can select and/or be configured to use a "container" foundational service that executes jobs in isolated containers without orchestration. In a final example within the compute foundational service 116 category, an advanced service 112 can select and/or be configured to use an "orchestrated container" foundational service that executes jobs in orchestrated containers. Other types of compute foundational services 116 are also contemplated in the context of this disclosure.

To illustrate examples types of foundational services within the storage foundational service 118 category, an advanced service 112 can select and/or be configured to use a "premium solid state drive" foundational service that provides consistent low-latency storage operations coupled with high input/output per second (IOPS) to the advanced service 112. In another example within the storage foundational service 118 category, an advanced service 112 can select and/or be configured to use a "standard solid state drive" foundational service that provides storage operations with higher latency and lower IOPS to the advanced service 112 but at a lower cost, when compared to the premium solid state drive foundational service. In yet another example within the storage foundational service 118 category, an advanced service 112 can select and/or be configured to use a "hard disk drive" foundational service that provides storage operations with reduced performance but at a much lower cost when compared to the standard and premium solid state drive foundational services. In a further example within the storage foundational service 118 category, an advanced service 112 can select and/or be configured to use a "files" foundational service that offers fully managed file shares that are accessible via industry standards (e.g., Server Message Block (SMB) protocol, Network File System (NFS) protocol, and Representational State Transfer (REST) Application Programming Interfaces (APIs)). In a final example within the storage foundational service 118 category, an advanced service 112 can select and/or be configured to use a "page blob" foundational service that provides low cost data replication to the advanced service 112. Other types of storage foundational services 118 are also contemplated in the context of this disclosure.

To illustrate examples types of foundational services within the networking foundational service 120 category, an advanced service 112 can select and/or be configured to use an "application delivery" foundational service that provides global load balancing and site acceleration service for the advanced service 112. Furthermore, the application delivery foundational service offers "Layer 7" capabilities for the advanced service 112 (e.g., Secure Sockets Layer (SSL) offload, path-based routing, fast failover, caching) to improve performance and availability. In another example within the networking foundational service 120 category, an advanced service 112 can select and/or be configured to use a "DNS-based traffic load balancer" foundational service that distributes traffic optimally across the geographic regions 114. In yet another example within the networking foundational service 120 category, an advanced service 112 can select and/or be configured to use an "application gateway" foundational service that offers various Layer 7 capabilities and firewall functionality for seamless transitions from public network spaces in web servers hosted in private network spaces on a region-by-region basis. Other types of networking foundational services 120 are also contemplated in the context of this disclosure.

As shown in FIG. 1, when a particular foundational service 122 deploys an update 124, it does so in association with a rollout schedule 126. The rollout schedule 126 defines an order 128 for which the update 124 is to be deployed to the geographic regions 114 of the cloud computing environment 102. The rollout schedule 126 further defines times at which the update 124 is to be deployed to the geographic regions 114 in the order 128. More specifically, the update 124 is sequentially deployed, over time, to the infrastructure (e.g., a datacenter, an edge site, a server farm) that composes the geographic regions 114 of the cloud computing environment 102. The rollout schedule 126 allows the system 100 to monitor the update 124 and determine if a regression 130 occurs earlier in the rollout process (e.g., the first geographic region or the earlier set of geographic regions in the order 128) before the regression 130 affects a larger number of advanced services 112 (e.g., a majority of the geographic regions 114 in the order 128).

As a result of the techniques described herein related to early regression detection, the order 128 of geographic regions 114 may be based on the relevancy of the geographic regions 114, thereby limiting the effect of a detected regression 130. In one example, the relevance of a geographic region 114 is determined based on an amount of traffic (e.g., a number of requests received from tenant services and/or cloud resource provider services) in the geographic region 114. Accordingly, the foundational service 122 and/or the dependency module 104 determines the order 128 for the geographic regions 114 based on an amount of traffic registered for each geographic region 114 in a defined time period. That is, the first geographic region in the order 128 has a lowest amount of traffic of all the geographic regions 114 and the last geographic region in the order 128 has the highest amount of traffic of all the geographic regions 114.

The dependency module 104 determines that the particular foundational service 122 is deploying the update 124 via the rollout schedule 126 that defines the order 128 for the geographic regions 114 in the cloud computing environment 102. For example, the particular foundational service 122 can provide, and the dependency module 104 receives, a deployment notification 132 indicating that the update 124 is being deployed based on the rollout schedule 126. The dependency module 104 uses the dependency graph 108 to identify a set of advanced services 134 that depend on the particular foundational service 122 within a first geographic region 136 in the order 128 for the geographic regions 114. For instance, the dependency module 104 accesses the dependency graph 108 to locate a node with an identification parameter associated with the particular foundational service 122. The dependency module 104 uses the node associated with the particular foundational service 122 as a starting point and follows edges of the dependency graph 108 to identify connected nodes that represents advanced services 134 that depend on the particular foundational service 122 within the first geographic region 136. The identified nodes include a location parameter that matches a location parameter of the first geographic region.

Now that the dependency module 104 has identified the set of advanced services 134 that depend on the particular foundational service 122 within the first geographic region 136, the dependency module 104 can use health signals associated with the set of advanced services 134 to determine if the update 124 causes the regression 130 in the first geographic region 136. Before the regression determination is further discussed below, it is noted that if no regression is determined in the first geographic region 136, then the regression detection techniques described herein can be applied to subsequent geographic regions 114 in the order 128 on a region-by-region basis (e.g., the second geographic region in the order, the third geographic region in the order, and so forth).

In one example, the health signals used to determine if the update 124 causes the regression 130 are a standard, or common, set of service level indicators (SLIs) 138 that the cloud computing environment 102 produces and monitors. Thus, the service level indicators 138 being produced and monitored can be defined by an operator of the cloud computing environment 102. The service level indicators 138 can include metrics such as latency (e.g., a measure of how long it takes to return a response to a request), error rate (e.g., a number of requests that encounter an error compared to a total number of requests processed), throughput (e.g., a measure of requests handled per second), and/or durability (e.g., a metric that tracks the resiliency and ability to maintain data integrity over time). Other service level indicators 138 are contemplated in the context of this disclosure.

Accordingly, the dependency module 104 retrieves values 140 for the service level indicators 138 for each advanced service 112 in the set of advanced services 134. Then, the dependency module 104 passes the values 140 to the health determination module 106. The health determination module 106 applies an anomaly detection algorithm 142 to the retrieved values 140 in order to categorize a health of each advanced service 112 in the set of advanced services 134 as being one of "healthy" 144 or "unhealthy" 146. The anomaly detection algorithm 142 can be specific to the advanced service 112. In one example, the health determination module 106 executes the anomaly detection algorithm 142 to determine whether the values 140 for a specific service level indicator 138 are above or below a threshold value established to indicate a healthy scenario or an unhealthy scenario. The anomaly detection algorithm 142 can be a dynamic anomaly detection algorithm that implements time-based adjustments to a range of accepted or expected values for a service level indicator 138 over time by learning the aforementioned higher threshold value to define the top of the range and/or the aforementioned lower threshold value to define the bottom of the range. Alternatively, the anomaly detection algorithm 142 can use static thresholds to define the top and/or the bottom of the range.

The threshold values used in the anomaly detection algorithm are specific to an advanced service 112 and are established for individual service level indicators 138. Moreover, the threshold values can be specific to a particular geographic region 136. In one example, the anomaly detection algorithm 142 is configured to apply weighted parameters to the determinations for individual service level indicators 138 in order to identify scenarios where the monitored service level indicators 138, as an aggregate, indicate that an advanced service 112 in the set of advanced services 134 is unhealthy 146. Stated alternatively, the anomaly detection algorithm 142 is configured to determine when the retrieved values 140, considered as an aggregate across the service level indicators 138, indicate that the performance of the advanced service 112 in the set of advanced services 134 is being impacted in a negative manner.

Now that the health determination module 106 has determined whether each advanced service 112 in the set of advanced services 134 is healthy 144 or unhealthy 146, the health determination module 106 determines whether the update 124 is causing the regression 130 for the particular foundational service 122 based on a number of unhealthy advanced services 148 in the set of advanced services 134. That is, the health determination module 106 determines that the update 124 is causing the regression 130 if the number of unhealthy advanced services 148 satisfies a threshold number of unhealthy advanced services 150 (e.g., is greater than the threshold number), as represented by element 152. In contrast, the health determination module 106 determines that the update 124 is not causing the regression 130 if the number of unhealthy advanced services 148 does not satisfy the threshold number of unhealthy advanced services 150 (e.g., is less than the threshold number).

If the health determination module 106 determines that the update 124 is causing the regression 130, the health determination module 106 generates and provides a regression notification 154, to the particular foundational service 122 (e.g., the engineering team tasked with operating and managing the particular foundational service 122), indicating that a regression 130 has likely been caused by the update 130 and/or instructing the particular foundational service 122 to halt the deployment of the update 124 so that it is not deployed to subsequent geographic regions 134 in the order 128 for the geographic regions.

FIG. 2A illustrates an example dependency graph 200 (e.g., dependency graph 108) with nodes 202 representing both foundational services 110 and advanced services 112, as well as edges 204 that represent the dependencies 109 between services. As shown, the nodes 202 in the dependency graph 200 are depicted by a circle and the edges 204 in the dependency graph 200 are depicted by a bi-directional line. The size and/or complexity of the dependency graph 200 is limited in this example for ease of discussion. It is understood in the context of this disclosure that a dependency graph 108 is more complex based on a large number of foundational services 110 and advanced services 112 that are typically executing in the cloud computing environment 102. Thus, a dependency graph 108 likely has more nodes and edges than those depicted in FIG. 2A.

The dependency graph 200 includes three nodes 206A-C that represent different types of "compute" foundational services. That is, node 206A represents the "ABC" compute service. Node 206B represents the "DEF" compute service. And node 206C represents the "XYZ" compute service. It is noted that "storage", "networking", and other categories of foundational services are omitted from the dependency graph 200 (also) for ease of discussion. However, it is understood in the context of this disclosure that a dependency graph 108 is more complex based on the inclusion of different categories of foundational services.

The dependency graph 200 includes four nodes 208A-D that represent different advanced services that depend on the "ABC" compute service represented by node 206A. That is, node 208A represents the "Alfa" service. Node 208B represents the "Bravo" service. Node 208C represents the "Charlie" service. And node 208D represents the "Delta" service.

The dependency graph 200 further includes two nodes 208E and 208F that represent different advanced services that depend on the "DEF" compute service represented by node 206B. That is, node 208E represents the "Echo" service. And node 208F represents the "Foxtrot" service.

Finally, the dependency graph 200 includes three nodes 208G-I that represent different advanced services that depend on the "XYZ" compute service represented by node 206C. That is, node 208G represents the "Golf" service. Node 208H represents the "Hotel" service. And node 208I represents the "India" service.

FIG. 2B illustrates a dependency graph database 210 that is part of, and/or supports, the dependency graph 200. The dependency graph database 210 includes parameters for the services/nodes in the dependency graph 200. As shown, the dependency graph database 210 stores information separately for the compute foundational services 212 and the advanced services 214 in the dependency graph 200. As reflected in the order 216 associated with an update 218 to the "ABC" compute service, which is discussed further below, the geographic regions in this example include "East01", "East02", "West01", "South", and "West02".

Node 206A is associated with a compute foundational service 212 and includes an identification parameter 220A that reflects an identification (e.g., a name such as "ABC", a number) for the "ABC" compute service. Moreover, node 206A includes location parameters 222A that identify all the geographic regions of the cloud computing environment 102, which thereby indicates that the "ABC" compute service executes in all the geographic regions of the cloud computing environment 102. Accordingly, the location parameters 222A include identifications for each of the "East01", "East02", "West01", "South", and "West02" geographic regions.

Node 206B is associated with a compute foundational service 212 and includes an identification parameter 220B that reflects an identification "DEF" for the "DEF" compute service. Moreover, node 206B includes location parameters 222B that also identify all the geographic regions of the cloud computing environment 102, which thereby indicates that the "DEF" compute service executes in all the geographic regions of the cloud computing environment 102.

Node 206C is associated with a compute foundational service 212 and includes an identification parameter 220C that reflects an identification "XYZ" for the "XYZ" compute service. Moreover, node 206C includes location parameters 222C that also identify all the geographic regions of the cloud computing environment 102, which thereby indicates that the "XYZ" compute service executes in all the geographic regions of the cloud computing environment 102.

In this example each of the compute foundational services 212 executes in all the geographic regions of the cloud computing environment 102. However, it is noted that some or all of the compute foundational services in a cloud computing environment 102 can execute in select geographic regions of the cloud computing environment 102 (e.g., not all the regions of the cloud computing environment 102).

Node 208A is associated with an advanced service 214 and includes an identification parameter 224A that reflects an identification "Alfa" for the "Alfa" service. Moreover, node 208A includes location parameter 226A that identifies "East01" as the geographic region of the cloud computing environment 102 in which the "Alfa" service executes.

Node 208B is associated with an advanced service 214 and includes an identification parameter 224B that reflects an identification "Bravo" for the "Bravo" service. Moreover, node 208B includes location parameter 226B that identifies "East02" as the geographic region of the cloud computing environment 102 in which the "Bravo" service executes.

Node 208C is associated with an advanced service 214 and includes an identification parameter 224C that reflects an identification "Charlie" for the "Charlie" service. Moreover, node 208C includes location parameters 226C that identify "East01" and "West02" as the geographic regions of the cloud computing environment 102 in which the "Bravo" service executes.

Node 208D is associated with an advanced service 214 and includes an identification parameter 224D that reflects an identification "Delta" for the "Delta" service. Moreover, node 208D includes location parameters 226D that identify all the geographic regions of the cloud computing environment 102, which thereby indicates that the "Delta" service executes in all the geographic regions of the cloud computing environment 102.

Node 208E is associated with an advanced service 214 and includes an identification parameter 224E that reflects an identification "Echo" for the "Echo" service. Moreover, node 208D includes location parameter 226E that identifies "East01" as the geographic region of the cloud computing environment 102 in which the "Echo" service executes.

Node 208F is associated with an advanced service 214 and includes an identification parameter 224F that reflects an identification "Foxtrot" for the "Foxtrot" service. Moreover, node 208F includes location parameters 226F that identify all the geographic regions of the cloud computing environment 102, which thereby indicates that the "Foxtrot" service executes in all the geographic regions of the cloud computing environment 102.

Node 208G is associated with an advanced service 214 and includes an identification parameter 224G that reflects an identification "Golf" for the "Golf" service. Moreover, node 208G includes location parameters 226G that identify "East01" and "South" as the geographic regions of the cloud computing environment 102 in which the "Golf" service executes.

Node 208H is associated with an advanced service 214 and includes an identification parameter 224H that reflects an identification "Hotel" for the "Hotel" service. Moreover, node 208H includes location parameters 226H that identify all the geographic regions of the cloud computing environment 102, which thereby indicates that the "Hotel" service executes in all the geographic regions of the cloud computing environment 102.

Node 208I is associated with an advanced service 214 and includes an identification parameter 224I that reflects an identification "India" for the "India" service. Moreover, node 208I includes location parameters 226I that identify "West01" and "West02" as the geographic regions of the cloud computing environment 102 in which the "India" service executes.

As mentioned above, FIG. 2B shows that the dependency module 104 receives a deployment notification 132 indicating that the "ABC" compute service is deploying the update 218 in the order 216 - "East01", "East02", "West01", "South", and "West02" - where the geographic region "East01" has been determined to have the lowest traffic and the geographic region "West02" has been determined to have the most traffic.

In response to receiving a deployment notification 132 indicating that the "ABC" compute service is deploying the update 218, the dependency module 104 accesses the dependency graph 200 and locates the node 206A via the identification parameter 220A. The dependency module 104 uses node 206A as a starting point 228 to identify the set of advanced services 230 that depend on the "ABC" compute service within the first geographic region ("East01") in the order 216, as shown in FIG. 2C.

More specifically, the dependency module 104 follows the edges from node 206A to identify connected nodes that represent advanced services that depend on the "ABC" compute service. In this example, the connected nodes include node 208A representing the "Alfa" service, node 208B representing the "Bravo" service, node 208C representing the "Charlie" service, and node 208D representing the "Delta" service. Next, the dependency module 104 determines which ones of the connected nodes have location parameters that match the current geographic region to which the update 218 is being deployed. The current geographic region starts with the first geographic region in the order 216 - "East01" - then consecutively shifts to the next geographic region(s) in the order 216 - "East02", "West01", "South", and "West02" - as long as no regressions are detected. In this example, the dependency module 104 checks location parameters 226A-D and determines that nodes 208A, 208C, and 208D include location parameters 226A, 226C, and 226D that match "East01", while node 206B includes a location parameter 226B - "East02" - that does not match "East01". Accordingly, the set of advanced services 230 that depend on the "ABC" compute service within the first geographic region ("East01") are shaded in FIG. 2C.

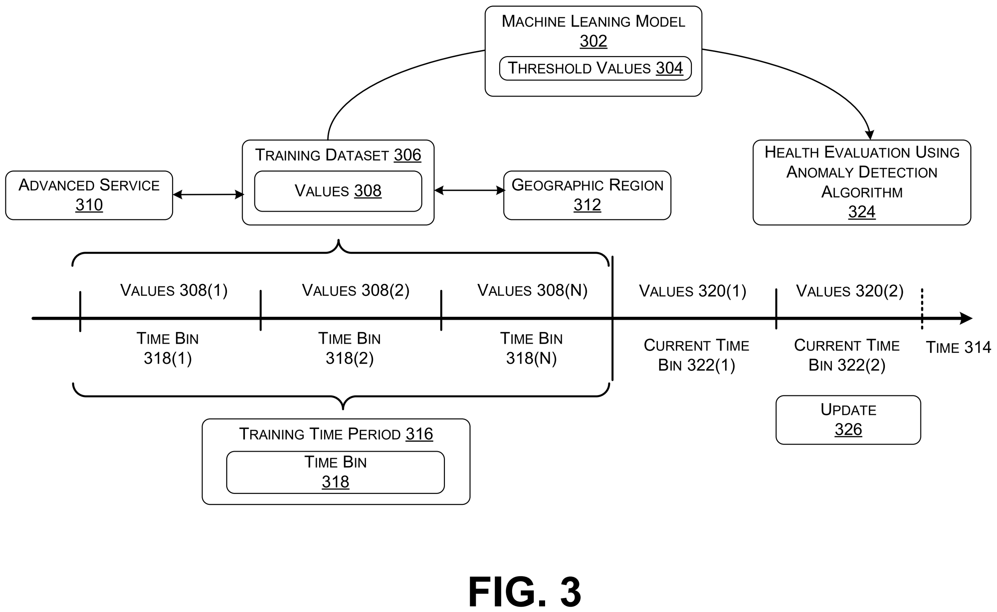

FIG. 3 is a diagram illustrating how a machine learning model 302 can learn threshold values 304 for the service level indicators 138 based on a training dataset 306 that includes monitored values 308 for the service level indicators 138. As discussed above, the threshold values 304 are used in the anomaly detection algorithm 142, which is applied to the values 140 of a particular advanced service 310. Accordingly, the training dataset 306 also includes labeled health states indicating whether the performance of the particular advanced service 310 is satisfactory ("healthy") or unsatisfactory ("unhealthy") during a particular time period, such as a time bin discussed below. The health state labels may be individually applied to a service level indicator 138 or universally applied to all the service level indicators 138. In various examples, the training dataset 306 is specific to a particular geographic region 312.

As shown, FIG. 3 includes a time axis 314. A training time period 316 is divided into a time bin 318 of a defined length (e.g., one minute time bin, five minute time bin, ten minute time bin, one hour time bin). The time bin 318 of a defined length is represented by time bins 318(1), time bin 318(2), and time bin 318(N) on the time axis 314. Thus, three time bins are shown for ease of discussion, i.e., N in this example equals three. However, the number N of defined time bins in most training time periods 126 is much larger (e.g., hundreds or even thousands of defined time bins). Additionally, a time bin 318 can correspond to a time slot such that multiple time bins corresponding to the time slot can be used to generate the threshold values 304. For example, time bin 318(1) can correspond to a 9-10am time slot while time bin 318(2) can correspond to the 10-11am time slot. In one example, the training time period 316 is a sliding predefined recent time window (e.g., the most recent day, the most recent week, the most recent two weeks, the most recent month, the most recent year).

Each time bin 318(1-N) is configured to produce values 308(1-N) for the service level indicators 138. The health determination module 106 is configure to use a machine learning model 302 to generate the threshold values 304 that reflect a time-scale variation based on the time bins 318(1-N). Again, the threshold values 304 are used by the anomaly detection algorithm 142 to define a baseline or range of expected or accepted values that reflect a healthy state for the advanced service 310 in the geographic region 312.

The time axis 300 further shows that current values 320(1) and 320(2) are received and/or accessed for current time bins 322(1) and 322(2) (e.g., the most recent five minutes). The health determination module 106 is configured to perform a health evaluation 324 for a current time bin 322(2) in which an update 326 is deployed using threshold values established for a corresponding time bin (e.g., threshold values 304 determined for a 9-10am time slot are used if the current time bin 322(2) is associated with the 9-10am time slot, threshold values 304 determined for a 10-11pm time slot are used if the current time bin 322(2) is associated with the 10-11pm time slot). A health evaluation period may span more than one time bin.

The machine learning model 302 can be any type of predictive model. The machine learning model 302 can use any one of neural networks (e.g., convolutional neural networks, recurrent neural networks such as Long Short-Term Memory), Gated Adaptive Network for Deep Automated Learning of Features, Naive Bayes, k-nearest neighbor algorithm, majority classifier, support vector machines, random forests, boosted trees, Classification and Regression Trees (CART), and so on in order to predict when the advanced service 310 is in an unhealthy state after the deployment of an update 326 to a foundational service upon which the advanced service depends.

Foundational services 110 aim to avoid any service interruption when deploying an update. However, particular types of updates to some foundational services 110 may require an unavoidable service interruption (e.g., a time when the foundational service is unavailable or offline). Accordingly, the current time bin 322(2) in which the values 320(2) are used to determine the health of the advanced service 310 can account for a known delay associated with an unavoidable service interruption. For example, the values 320(2) used to determine the health of the advanced service 310 are ones monitored and collected after a known time period (e.g., five minutes) during which a foundational service is being rebooted after an update is deployed.

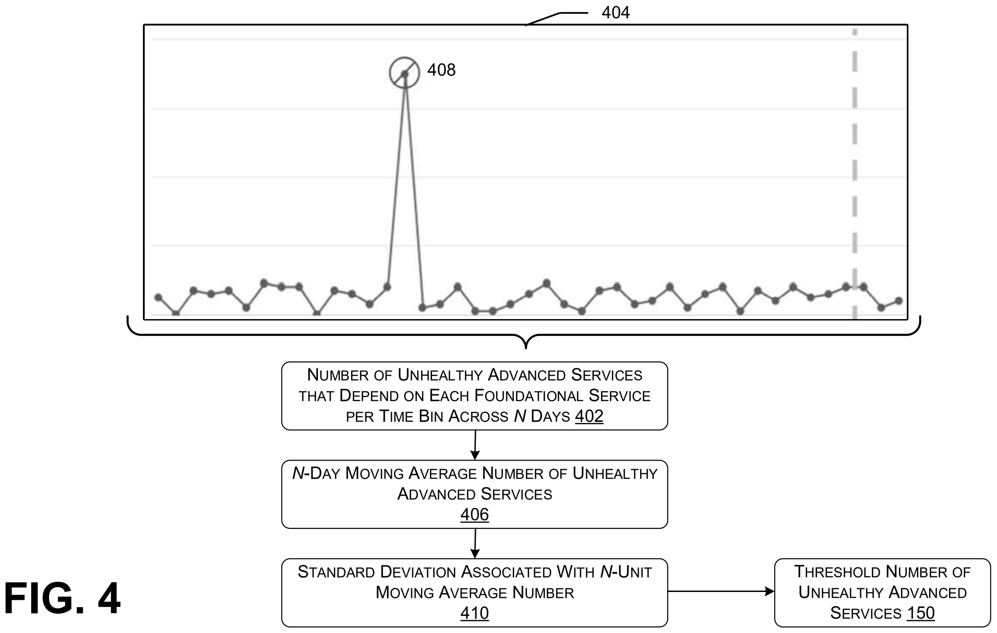

FIG. 4 is a diagram illustrating an example approach to calculating the threshold number of unhealthy advanced services 150. In this example, the health determination module 106 receives values representing the number of unhealthy advanced services, per time bin (e.g., five minutes, ten minutes), that depend on each foundational service 110 across a defined N number of time units such as days 402 (e.g., N equals seven days, fourteen days, thirty days), as plotted via chart 404. The health determination module 106 then calculates an N-day moving average number of unhealthy advanced services 406 for each foundational service 110. The N-day moving average number of unhealthy advanced services 406 for each foundational service 110 may be referred to as a steady state. In various examples, the health determination module 106 omits anomalous values (e.g., removes the highest 2% of values and/or the lowest 2% of values) when calculating the N-day moving average number of unhealthy advanced services 406. This removes values that have a significant impact on the N-day moving average number of advanced services 406, such as value 408.

Next, the health determination module 106 calculates the standard deviation 410 associated with the N-day moving average number 406. The standard deviation 410 is the square root of the variance of the N-day moving average number 406. The health determination module 106 calculates the deviation of each number of unhealthy advanced services per time bin, and squares the result. The variance is the average of the squared results and, as mentioned above, the standard deviation 410 is equal to the square root of the variance.

The health determination module 106 sets the threshold number of unhealthy advanced services 150 to be a predefined number of standard deviations 410 (e.g., "2σ", "3σ", "4σ") above the N-day moving average number 406. However, the health determination module 106 can set the threshold number of unhealthy advanced services 150 in other ways as well. For example, the health determination module 106 can set the threshold number of unhealthy advanced services 150 to be a predefined percentage (e.g., 10%, 20%, 30%) above the N-day moving average number 406. Consequently, the threshold number of unhealthy advanced services 150 is used to determine if an update 124 to the foundational service 122 has a negative effect on the steady state. This occurs if the number of unhealthy advanced services 148 increases to a number that exceeds the threshold number of unhealthy advanced services 150.

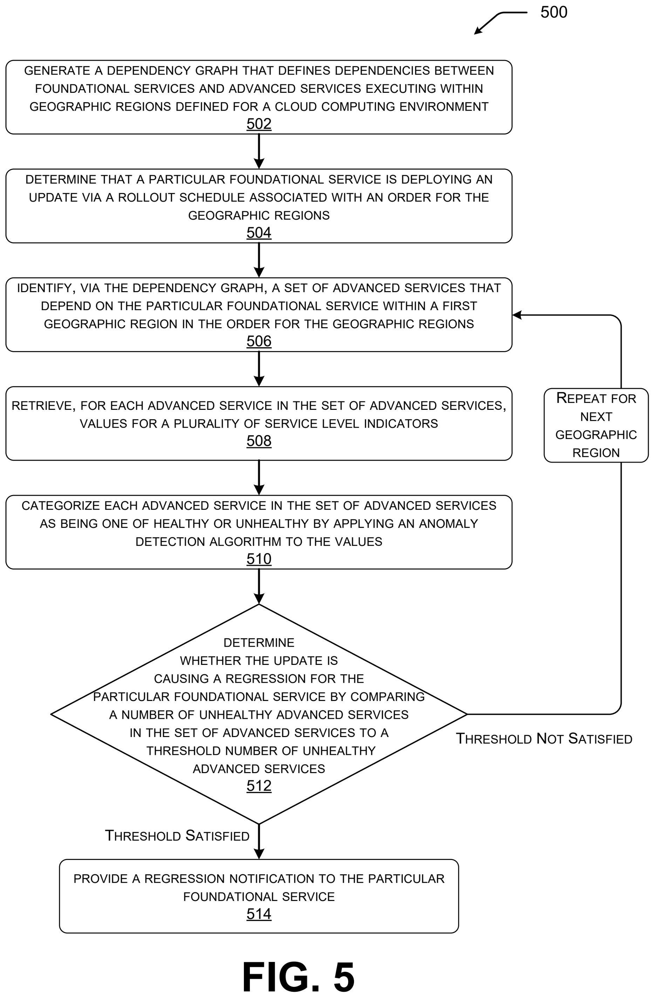

Proceeding to FIG. 5, a process 500 for determining that an update deployed by a foundational service within a cloud computing environment has caused a regression is shown and described. The process 500 begins at operation 502 where a system generates a dependency graph that defines dependencies between foundational services and advanced services executing within geographic regions defined for a cloud computing environment.

At operation 504, the system determines that a particular foundational service is deploying an update via a rollout schedule associated with an order for the geographic regions.

At operation 506, the system identifies, via the dependency graph, a set of advanced services that depend on the particular foundational service within a first geographic region in the order for the geographic regions.

At operation 508, the system retrieves, for each advanced service in the set of advanced services, values for a plurality of service level indicators.

At operation 510, the system categorizes each advanced service in the set of advanced services as being one of healthy or unhealthy by applying an anomaly detection algorithm to the values.

At operation 512, the system determines whether the update is causing a regression for the particular foundational service by comparing a number of unhealthy advanced services in the set of advanced services to a threshold number of unhealthy advanced services.

If operation 512 determines that the number of unhealthy advanced services in the set of advanced services satisfies (e.g., is greater than) the threshold number of unhealthy advanced services, then the update is causing a regression for the particular foundational service and the system provides a regression notification to the particular foundational service at operation 514. As described above, the regression notification can instruct the particular foundational service to halt the deployment of the update to subsequent geographic regions in the order for the geographic regions.

If operation 512 determines that the number of unhealthy advanced services in the set of advanced services does not satisfy (e.g., is less than) the threshold number of unhealthy advanced services, then the update is not causing a regression for the particular foundational service and the system proceeds back to operation 506 to repeat operations 506, 508, 510, and 512 for a next geographic region in the order of geographic regions.

For ease of understanding, the process discussed in this disclosure is delineated as separate operations represented as independent blocks. However, these separately delineated operations should not be construed as necessarily order dependent in their performance. The order in which the process is described is not intended to be construed as a limitation, and any number of the described process blocks may be combined in any order to implement the process or an alternate process. Moreover, it is also possible that one or more of the provided operations is modified or omitted.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated method can end at any time and need not be performed in its entirety. Some or all operations of the method, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the process 500 can be implemented, at least in part, by modules running the features disclosed herein can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the process 500 may also be implemented in other ways. In addition, one or more of the operations of the process 500 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

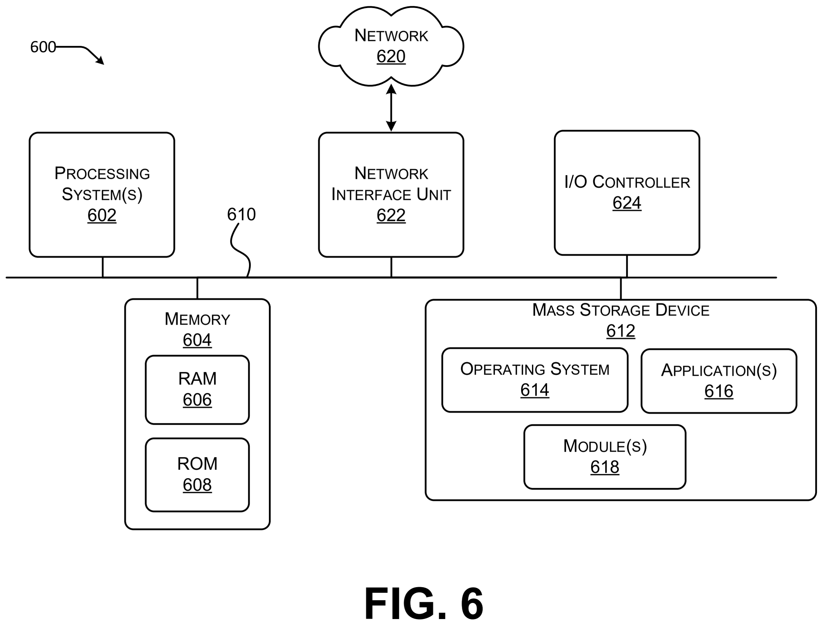

FIG. 6 shows additional details of an example computer architecture 600 for a device, such as a computer or a server configured as part of the system 100, capable of executing computer instructions (e.g., a module described herein). The computer architecture 600 illustrated in FIG. 6 includes processing system 602, a system memory 604, including a random-access memory 606 (RAM) and a read-only memory (ROM) 608, and a system bus 610 that couples the memory 604 to the processing system 602. The processing system 602 comprises processing unit(s). In various examples, the processing unit(s) of the processing system 602 are distributed. Stated another way, one processing unit of the processing system 602 may be located in a first location (e.g., a rack within a datacenter) while another processing unit of the processing system 602 is located in a second location separate from the first location. Moreover, the systems discussed herein can be provided as a distributed computing system such as a cloud service.

Processing unit(s), such as processing unit(s) of processing system 602, can represent, for example, a CPU-type processing unit, a GPU-type processing unit, a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like.

A basic input/output system containing the basic routines that help to transfer information between elements within the computer architecture 600, such as during startup, is stored in the ROM 608. The computer architecture 600 further includes a mass storage device 612 for storing an operating system 614, application(s) 616, modules 618, and other data described herein.

The mass storage device 612 is connected to processing system 602 through a mass storage controller connected to the bus 610. The mass storage device 612 and its associated computer-readable media provide non-volatile storage for the computer architecture 600. Although the description of computer-readable media contained herein refers to a mass storage device, the computer-readable media can be any available computer-readable storage media or communication media that can be accessed by the computer architecture 600.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 600 may operate in a networked environment using logical connections to remote computers through the network 620. The computer architecture 600 may connect to the network 620 through a network interface unit 622 connected to the bus 610. The computer architecture 600 also may include an input/output controller 624 for receiving and processing input from a number of other devices, including a keyboard, mouse, touch, or electronic stylus or pen. Similarly, the input/output controller 624 may provide output to a display screen, a printer, or other type of output device.

The software components described herein may, when loaded into the processing system 602 and executed, transform the processing system 602 and the overall computer architecture 600 from a general-purpose computing system into a special-purpose computing system customized to facilitate the functionality presented herein. The processing system 602 may be constructed from any number of transistors or other discrete circuit elements, which may individually or collectively assume any number of states. More specifically, the processing system 602 may operate as a finite-state machine, in response to executable instructions contained within the software modules disclosed herein. These computer-executable instructions may transform the processing system 602 by specifying how the processing system 602 transition between states, thereby transforming the transistors or other discrete hardware elements constituting the processing system 602.

Described herein is a system which implements techniques for efficiently determining that an update deployed by a foundational service has caused a regression based on an aggregate health determination associated with tenant services and/or cloud resource provider services that depend upon the foundational service. The deployment of the update is initiated by an entity (e.g., an engineering team) tasked with operating and/or managing the foundational service. Accordingly, the system described herein can generate and provide a communication, to the foundational service (e.g., entity), indicating that a regression has likely been caused by the update and/or instructing the foundational service to halt the deployment of the update.

The disclosure presented herein also encompasses the subject matter set forth in the following clauses.

Example Clause A, a method comprising: generating a dependency graph that defines dependencies between foundational services and advanced services executing within geographic regions defined for a cloud computing environment; determining that a particular foundational service is deploying an update via a rollout schedule associated with an order for the geographic regions; identifying, via the dependency graph, a set of advanced services that depend on the particular foundational service within a first geographic region in the order for the geographic regions; for an advanced service in the set of advanced services: retrieving values for a plurality of service level indicators; categorizing the advanced service as being one of healthy or unhealthy by applying an anomaly detection algorithm to the values; determining that the update is causing a regression for the particular foundational service based on a number of unhealthy advanced services in the set of advanced services satisfying a threshold number of unhealthy advanced services; and providing a regression notification to the particular foundational service, the regression notification instructing the particular foundational service to halt the deployment of the update to subsequent geographic regions in the order for the geographic regions in response to determining that the update is causing the regression for the particular foundational service.

Example Clause B, the method of Example Clause A, wherein: the anomaly detection algorithm is configured with threshold values that are specific to the advanced service; and the method further comprises learning, by a machine learning model, the threshold values by analyzing a training dataset for the advanced service over a training time period.

Example Clause C, the method of Example Clause A or Example Clause B, further comprising establishing the threshold number of unhealthy advanced services by: calculating an average number of unhealthy advanced services across a defined number N of time units; calculating a standard deviation associated with the average number of unhealthy advanced services; and setting the threshold number of unhealthy advanced services to be a predefined number of standard deviations above the average number of unhealthy advanced services.

Example Clause D, the method of any one of Example Clauses A through C, wherein the foundational services include multiple types of foundational services in each of a compute foundational service category, a storage foundational service category, and a networking foundational service category.

Example Clause E, the method of any one of Example Clauses A through D, wherein the advanced services include tenant services and cloud resource provider services.

Example Clause F, the method of any one of Example Clauses A through E, further comprising determining the order for the geographic regions based on an amount of traffic registered for each geographic region in a defined time period, wherein the first geographic region in the order for the geographic regions has a lowest amount of traffic.

Example Clause G, the method of any one of Example Clauses A through F, wherein each advanced service and each foundational service comprises an identification parameter and at least one location parameter.

Example Clause H, a system comprising: a processing system; and a computer readable storage medium storing instructions that, when executed by the processing system, cause the system to perform operations comprising: determining that a particular foundational service is deploying an update via a rollout schedule associated with an order for the geographic regions; identifying, via a dependency graph, a set of advanced services that depend on the particular foundational service within a first geographic region in the order for the geographic regions; for an advanced service in the set of advanced services: retrieving values for a plurality of service level indicators; categorizing the advanced service as being one of healthy or unhealthy by applying an anomaly detection algorithm to the values; determining that the update is causing a regression for the particular foundational service based on a number of unhealthy advanced services in the set of advanced services satisfying a threshold number of unhealthy advanced services; and providing a regression notification to the particular foundational service in response to determining that the update is causing the regression for the particular foundational service.

Example Clause I, the system of Example Clause H, wherein: the anomaly detection algorithm is configured with threshold values that are specific to the advanced service; and the operations further comprise learning, by a machine learning model, the threshold values by analyzing a training dataset for the advanced service over a training time period.

Example Clause J, the system of Example Clause H or Example Clause I, wherein the operations further comprise establishing the threshold number of unhealthy advanced services by: calculating an average number of unhealthy advanced services across a defined number N of time units; calculating a standard deviation associated with the average number of unhealthy advanced services; and setting the threshold number of unhealthy advanced services to be a predefined number of standard deviations above the average number of unhealthy advanced services.

Example Clause K, the system of any one of Example Clauses H through J, wherein the foundational services include multiple types of foundational services in each of a compute foundational service category, a storage foundational service category, and a networking foundational service category.

Example Clause L, the system of any one of Example Clauses H through K, wherein the advanced services include tenant services and cloud resource provider services.

Example Clause M, the system of any one of Example Clauses H through L, wherein the operations further comprise determining the order for the geographic regions based on an amount of traffic registered for each geographic region in a defined time period, wherein the first geographic region in the order for the geographic regions has a lowest amount of traffic.

Example Clause N, the system of any one of Example Clauses H through M, wherein each advanced service and each foundational service comprises an identification parameter and at least one location parameter.

Example Clause O, a computer readable storage medium storing instructions that, when executed by a processing system, cause a system to perform operations comprising: determining that a particular foundational service is deploying an update via a rollout schedule associated with an order for the geographic regions; identifying, via a dependency graph, a set of advanced services that depend on the particular foundational service within a first geographic region in the order for the geographic regions; for an advanced service in the set of advanced services: retrieving values for a plurality of service level indicators; categorizing the advanced service as being one of healthy or unhealthy by applying an anomaly detection algorithm to the values; determining that the update is causing a regression for the particular foundational service based on a number of unhealthy advanced services in the set of advanced services satisfying a threshold number of unhealthy advanced services; and providing a regression notification to the particular foundational service in response to determining that the update is causing the regression for the particular foundational service.

Example Clause P, the computer readable storage medium of Example Clause O, wherein: the anomaly detection algorithm is configured with threshold values that are specific to the advanced service; and the operations further comprise learning, by a machine learning model, the threshold values by analyzing a training dataset for the advanced service over a training time period.

Example Clause Q, the computer readable storage medium of Example Clause O or Example Clause P, wherein the operations further comprise establishing the threshold number of unhealthy advanced services by: calculating an average number of unhealthy advanced services across a defined number N of time units; calculating a standard deviation associated with the average number of unhealthy advanced services; and setting the threshold number of unhealthy advanced services to be a predefined number of standard deviations above the average number of unhealthy advanced services.

Example Clause R, the computer readable storage medium of any one of Examples Clauses O through Q, wherein the foundational services include multiple types of foundational services in each of a compute foundational service category, a storage foundational service category, and a networking foundational service category.

Example Clause S, the computer readable storage medium of any one of Examples Clauses O through R, wherein the operations further comprise determining the order for the geographic regions based on an amount of traffic registered for each geographic region in a defined time period, wherein the first geographic region in the order for the geographic regions has a lowest amount of traffic.

Example Clause T, the computer readable storage medium of any one of Examples Clauses O through S, wherein each advanced service and each foundational service comprises an identification parameter and at least one location parameter.

Although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without author input or prompting, whether these features, elements, and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain example embodiments have been described, these embodiments have been presented by way of example only, and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the scope of the inventions disclosed herein. The accompanying claims and their equivalents are intended to cover such forms or modifications as would fall within the scope of certain of the inventions disclosed herein.

It should be appreciated any reference to "first," "second," etc. items and/or abstract concepts within the description is not intended to and should not be construed to necessarily correspond to any reference of "first," "second," etc. elements of the claims. In particular, within this Summary and/or the following Detailed Description, items and/or abstract concepts such as, for example, individual computing devices and/or operational states of the computing cluster may be distinguished by numerical designations without such designations corresponding to the claims or even other paragraphs of the Summary and/or Detailed Description.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method (500) comprising:
generating (502) a dependency graph that defines dependencies between foundational services and advanced services executing within geographic regions defined for a cloud computing environment;
determining (504) that a particular foundational service is deploying an update via a rollout schedule associated with an order for the geographic regions;
identifying (506), via the dependency graph, a set of advanced services that depend on the particular foundational service within a first geographic region in the order for the geographic regions;
for an advanced service in the set of advanced services:
retrieving (508) values for a plurality of service level indicators;
categorizing (510) the advanced service as being one of healthy or unhealthy by applying an anomaly detection algorithm to the values;
determining (512) that the update is causing a regression for the particular foundational service based on a number of unhealthy advanced services in the set of advanced services satisfying a threshold number of unhealthy advanced services; and
providing (514) a regression notification to the particular foundational service, the regression notification instructing the particular foundational service to halt the deployment of the update to subsequent geographic regions in the order for the geographic regions in response to determining that the update is causing the regression for the particular foundational service.

2. The method of claim 1, wherein:
the anomaly detection algorithm is configured with threshold values that are specific to the advanced service; and
the method further comprises learning, by a machine learning model, the threshold values by analyzing a training dataset for the advanced service over a training time period.

3. The method of claim 1 or claim 2, further comprising establishing the threshold number of unhealthy advanced services by:
calculating an average number of unhealthy advanced services across a defined number *N* of time units;
calculating a standard deviation associated with the average number of unhealthy advanced services; and
setting the threshold number of unhealthy advanced services to be a predefined number of standard deviations above the average number of unhealthy advanced services.

4. The method of any preceding claim, wherein the foundational services include multiple types of foundational services in each of a compute foundational service category, a storage foundational service category, and a networking foundational service category.

5. The method of any preceding claim, wherein the advanced services include tenant services and cloud resource provider services.

6. The method of any preceding claim, further comprising determining the order for the geographic regions based on an amount of traffic registered for each geographic region in a defined time period, wherein the first geographic region in the order for the geographic regions has a lowest amount of traffic.

7. The method of any preceding claim, wherein each advanced service and each foundational service comprises an identification parameter and at least one location parameter.

8. A system (600) comprising:
a processing system (602); and
a computer readable storage medium storing instructions that, when executed by the processing system, cause the system to perform operations comprising:
determining (504) that a particular foundational service is deploying an update via a rollout schedule associated with an order for the geographic regions;
identifying (506), via a dependency graph, a set of advanced services that depend on the particular foundational service within a first geographic region in the order for the geographic regions;
for an advanced service in the set of advanced services:
retrieving (508) values for a plurality of service level indicators;
categorizing (510) the advanced service as being one of healthy or unhealthy by applying an anomaly detection algorithm to the values;
determining (512) that the update is causing a regression for the particular foundational service based on a number of unhealthy advanced services in the set of advanced services satisfying a threshold number of unhealthy advanced services; and
providing (514) a regression notification to the particular foundational service in response to determining that the update is causing the regression for the particular foundational service.

9. The system of claim 8, wherein:
the anomaly detection algorithm is configured with threshold values that are specific to the advanced service; and
the operations further comprise learning, by a machine learning model, the threshold values by analyzing a training dataset for the advanced service over a training time period.

10. The system of claim 8 or claim 9, wherein the operations further comprise establishing the threshold number of unhealthy advanced services by:
calculating an average number of unhealthy advanced services across a defined number *N* of time units;
calculating a standard deviation associated with the average number of unhealthy advanced services; and
setting the threshold number of unhealthy advanced services to be a predefined number of standard deviations above the average number of unhealthy advanced services.

11. The system of any of claims 8 to 10, wherein the foundational services include multiple types of foundational services in each of a compute foundational service category, a storage foundational service category, and a networking foundational service category.

12. The system of any of claims 8 to 11, wherein the advanced services include tenant services and cloud resource provider services.

13. The system of any of claims 8 to 12, wherein the operations further comprise determining the order for the geographic regions based on an amount of traffic registered for each geographic region in a defined time period, wherein the first geographic region in the order for the geographic regions has a lowest amount of traffic.

14. The system of any of claims 8 to 13, wherein each advanced service and each foundational service comprises an identification parameter and at least one location parameter.

15. A computer readable storage medium (612) storing instructions that, when executed by a processing system, cause a system to perform operations comprising:
determining (504) that a particular foundational service is deploying an update via a rollout schedule associated with an order for the geographic regions;
identifying (506), via a dependency graph, a set of advanced services that depend on the particular foundational service within a first geographic region in the order for the geographic regions;
for an advanced service in the set of advanced services:
retrieving (508) values for a plurality of service level indicators;
categorizing (510) the advanced service as being one of healthy or unhealthy by applying an anomaly detection algorithm to the values;
determining (512) that the update is causing a regression for the particular foundational service based on a number of unhealthy advanced services in the set of advanced services satisfying a threshold number of unhealthy advanced services; and
providing (514) a regression notification to the particular foundational service in response to determining that the update is causing the regression for the particular foundational service.
